# EUROPEAN PATENT APPLICATION

(11) **EP 4 772 837 A1**
(43) Date of publication of application: **08.07.2026**
(21) Application number: 25221405.1
(22) Date of filing: 08.12.2025
(51) Int. Cl.: G01C 23/00, G01C 21/36

(54) **ATTRIBUTE VISIBILITY METHODS AND RELATED SYNTHETIC VISION SYSTEMS**

(30) Priority: 02.01.2025 US 202519008271
(71) Applicant: Honeywell International Inc., Charlotte, NC 28202 (US)
(72) Inventor: HE, Zuowei, Charlotte, 28202 (US); HE, Gang, Charlotte, 28202 (US); FEYEREISEN, Thea, Charlotte, 28202 (US)
(74) Representative: Ingrassia, Fisher & Lorenz UK Ltd.

(57) **Abstract**

Aircraft systems and methods are provided for displaying attributes on a forward-looking graphical user interface display. An exemplary method involves determining candidate display positions for an attribute associated with a displayed object based at least in part on the geographic location and the altitude associated with the object, selecting, from among the candidate display positions, a visible display position for the attribute based at least in part on relationship between the visible display position and a reference display position for the attribute, and rendering a graphical representation of the attribute at the visible display position on the forward-looking graphical user interface display.

## Description

### TECHNICAL FIELD

The subject matter described herein relates generally to vehicle systems, and more particularly, embodiments of the subject matter relate to aircraft systems and related forward-looking or other three-dimensional displays for assisting pilots and other operators during flight.

### BACKGROUND

Modern electronic displays for vehicles (such as aircraft, automobiles, marine vessels, or trains) display a considerable amount of information, such as vehicle position, navigation and terrain information. In the case of an aircraft, many modern flight deck displays (or cockpit displays) are utilized to provide a number of different displays from which the pilot can obtain information or perform functions related to, for example, navigation, flight planning, guidance and navigation, and performance management. For example, many aircraft include a primary flight display (PFD) or other forward-looking perspective view display for providing visual feedback with respect to the situation information (e.g., attitude, altitude, airspeed, flight path or track, and/or the like) and other guidance or symbology for operating the aircraft (e.g., flight plan or route symbology, lateral deviation markers and/or the like). A typical PFD may include attitude indicators, an altimeter or other altitude indicator, a vertical speed indicator, an airspeed indicator (or airspeed tape), a heading indicator and/or the like. Some PFDs also incorporate an artificial horizon or terrain background underlying the attitude indicators to convey the current state of the aircraft with respect to Earth underlying the other PFD indicators, and in some instances employ synthetic vision or other three-dimensional renderings to provide additional downpath guidance or information to a pilot or other operator.

In practice, the size of an electronic display inside an aircraft cockpit is often limited due to the number of instruments and human-machine interface elements inside the cockpit (e.g., joysticks, knobs, buttons, and the like) along with the need for the pilot to have an unobstructed view outside the aircraft. Furthermore, some of the display area on the electronic display may be utilized or reserved for other processes (e.g., lateral map displays, vertical situation displays, flight management windows, and the like). As a result of these display constraints along with the quantity of information depicted, it is difficult to display all of the desired information and symbology for operating the aircraft on a PFD or other forward-looking display in a clear and uncluttered manner. Workload devoted to deciphering information on a head down display detracts from focus that could otherwise be directed forward or focused on primary operation of the aircraft. Accordingly, it is desirable to improve the ease of discerning information depicted on a PFD or other forward-looking display to reduce pilot workload and head down time, and thereby improve situational awareness with respect to forward operation. Other desirable features and characteristics will become apparent from the subsequent detailed description and the appended claims, taken in conjunction with the accompanying drawings and this background.

### BRIEF SUMMARY

Systems and methods are provided for displaying attributes on a forward-looking graphical user interface display to assist operation of a vehicle, such as an aircraft. One exemplary method involves providing, on a display device associated with the vehicle, a graphical user interface (GUI) display comprising a graphical representation of a forward-looking perspective view of terrain in a vicinity of the vehicle and a second graphical representation of an object overlying the graphical representation of the forward-looking perspective view of terrain at a displayed position corresponding to a geographic location and an altitude associated with the object, determining a plurality of candidate display positions for an attribute associated with the object based at least in part on the geographic location and the altitude associated with the object, wherein the plurality of candidate display positions encompass the displayed position of the object, selecting, from among the plurality of candidate display positions, a visible display position for the attribute based at least in part on a reference display position for the attribute, and rendering, on the display device, a third graphical representation of the attribute at the visible display position.

An apparatus for a non-transitory computer-readable medium is also provided. The computer-readable medium has computer-executable instructions stored thereon that, when executed by a processing system, cause the processing system to provide, on a display device associated with an aircraft, a primary flight display (PFD) GUI display comprising a graphical representation of a forward-looking perspective view of terrain ahead of the aircraft and a second graphical representation of a navigational reference point of a flight plan for the aircraft overlying the graphical representation of the forward-looking perspective view of terrain at a displayed position corresponding to a geographic location and an altitude associated with the navigational reference point, determine a plurality of candidate display positions for an attribute associated with the navigational reference point based at least in part on the geographic location and the altitude associated with the navigational reference point, wherein the plurality of candidate display positions encompass the displayed position of the navigational reference point, select, from among the plurality of candidate display positions, a visible display position for the attribute based at least in part on a reference display position for the attribute and respective display positions of PFD symbology overlying the graphical representation of the forward-looking perspective view of terrain on the PFD GUI display, and render, on the PFD GUI display, a third graphical representation of the attribute at the visible display position.

An exemplary embodiment of an aircraft system is also provided. The aircraft system includes a display device having a primary flight display including a graphical representation of a forward-looking perspective view of terrain rendered thereon and a processing system coupled to the display device to determine a plurality of candidate display positions for an attribute associated with a waypoint of a flight plan based at least in part on a geographic location and an altitude associated with the waypoint, wherein the plurality of candidate display positions encompass a displayed position of waypoint symbology corresponding to the waypoint on the primary flight display, select, from among the plurality of candidate display positions, a visible display position for the attribute based at least in part on a relationship between the visible display position and a reference display position for the attribute, and render, on the primary flight display on the display device, a third graphical representation of the attribute at the visible display position.

This summary is provided to describe select concepts in a simplified form that are further described in the Detailed Description. This summary is not intended to identify key or essential features of the claimed subject matter, nor is it intended to be used as an aid in determining the scope of the claimed subject matter.

### BRIEF DESCRIPTION OF DRAWINGS

Exemplary embodiments of the subject matter of the present disclosure will hereinafter be described in conjunction with the following drawing figures, wherein like numerals denote like elements, and wherein:
FIG. 1 is a block diagram of a system for an aircraft in accordance with one or more exemplary embodiments;
FIG. 2 is a flow diagram of an attribute display process suitable for implementation in connection with the aircraft system of FIG. 1 in one or more exemplary embodiments;
FIG. 3 is a graph depicting an exemplary relationship between a vertical deviation score and a candidate display position suitable for implementation in connection with the attribute display process of FIG. 2;
FIG. 4 is a graph depicting an exemplary relationship between a temporal deviation score and a candidate display position suitable for implementation in connection with the attribute display process of FIG. 2;
FIG. 5 is a graph depicting an exemplary relationship between an attribute visibility score and a candidate display position suitable for implementation in connection with the attribute display process of FIG. 2; and
FIGS. 6-7 depict an exemplary flight deck display including a displayed attribute rendered at a position on a primary flight display in connection with the attribute display process of FIG. 2 in accordance with one or more embodiments.

### DETAILED DESCRIPTION

The following detailed description is merely exemplary in nature and is not intended to limit the subject matter of the application and uses thereof. Furthermore, there is no intention to be bound by any expressed or implied theory presented in the preceding technical field, background, brief summary, or the following detailed description.

Embodiments of the subject matter described herein relate to systems and methods for improving visibility of attributes and related symbology concurrently presented to a pilot or other vehicle operator on a forward-looking graphical user interface (GUI) display, such as a primary flight display (PFD) GUI display, a synthetic vision system (SVS) GUI display, an enhanced vision system (EVS) GUI display, and/or the like. For purposes of explanation, the subject matter is described herein primarily in the context of PFD depicted on a flight deck display, an electronic flight bag (EFB) or other cockpit display onboard an aircraft in an aviation context. That said, it should be appreciated the subject matter is not limited to any particular type of GUI display or map, and furthermore, that the subject matter described herein is not necessarily limited to use with aircraft or any other particular type of vehicle, system or application, and may be similarly utilized in other applications, systems or environments, including, but not limited to use with other types of vehicles (e.g., automobiles, marine vessels, trains, etc.).

Exemplary implementations described herein provide a GUI display including a forward-looking perspective view of terrain in a vicinity of an aircraft including graphical representations of objects or other symbology pertaining operation of the aircraft overlying the terrain depiction at respective displayed positions corresponding to their respective geographic locations and altitudes. For example, symbology corresponding to waypoints or other navigational reference points associated with a flight plan may be rendered on or overlying the terrain background at displayed positions overlying the terrain corresponding to the respective latitude and longitude coordinates associated with the respective waypoints, and at displayed positions relative to the terrain that correspond to the respective altitude associated with the respective waypoint (e.g., a planned altitude for the respective waypoint, an altitude constraint associated with the respective waypoint, and/or the like), thereby allowing a pilot or other operator to perceive the geospatial relationship between a respective waypoint and the surrounding terrain.

To display attributes associated with a respective object on the GUI display, exemplary implementations described herein dynamically determine a plurality of different candidate display positions for an attribute associated with the object. In this regard, the different candidate display positions corresponds to an area of the GUI display that encompasses or spans the displayed position of the object where at least a portion of a graphical representation of the attribute can be anchored or otherwise positioned at a displayed position corresponding to a respective altitude above the terrain at the geographic location of the object. For example, the plurality of different candidate display positions may correspond to a range of different altitudes above and/or below a respective altitude associated with a displayed waypoint symbol that encompasses, spans or includes the respective altitude associated with that displayed waypoint symbol. The plurality of different candidate display positions may also correspond to different lateral positions to the left and/or right of the displayed waypoint symbol at the respective altitude associated with that displayed waypoint symbol or along the range of altitudes corresponding to the different candidate display positions.

As described in greater detail below, in an exemplary implementation, each candidate location of the plurality of different candidate display positions is scored, ranked or otherwise evaluated based on a spatial relationship between the respective candidate location and a reference position on the GUI display. In this regard, a target display position may be determined based on the respective displayed position of a waypoint symbol and utilized as the reference position for purposes of scoring the different candidate display positions based on the distance from that target display position. Additionally, in exemplary implementations, the different candidate display positions are scored in a multivariate manner that accounts for the visibility of the respective candidate display position in relation to other symbology depicted on the GUI display (e.g., within overlying or underlying graphics layers), while also accounting for deviations or variability in the displayed position if the respective attribute. In this regard, in exemplary implementations, the plurality of candidate display positions are dynamically determined and dynamically scored in real-time, with the aggregate scoring of the candidate display positions being biased or weighted to favor candidate display positions closer to the current (or prior) displayed position associated with the attribute to minimize variability in the displayed position of the attribute on the GUI display. At the same time, if or when the displayed position of the displayed attribute impacts visibility of other symbology depicted within overlying or underlying graphics layers, the displayed position of the displayed attribute is dynamically adjusted in relation to the displayed position of the respective waypoint symbol to maintain visibility of the displayed attribute without impairing visibility of other symbology.

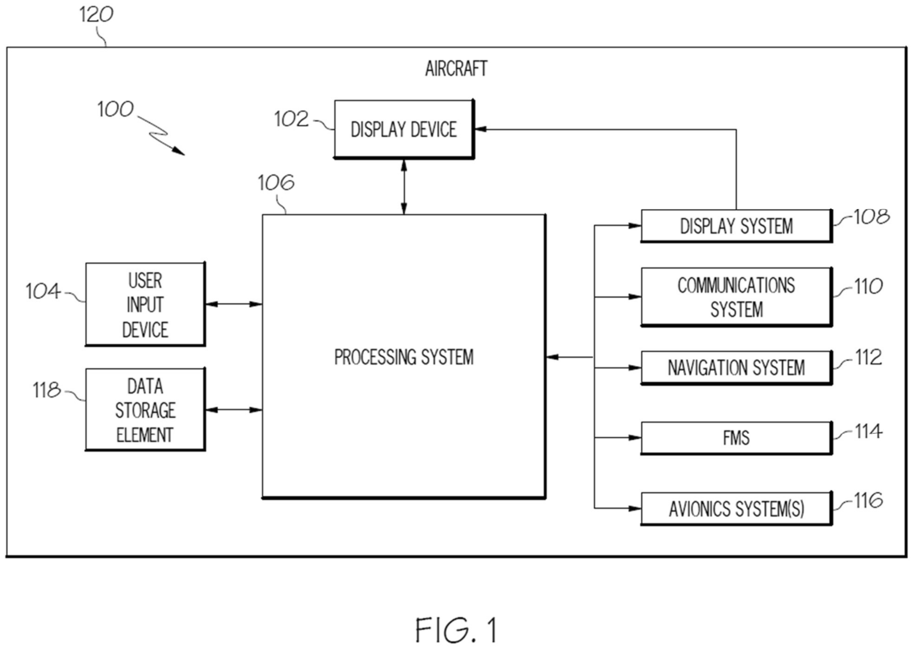

FIG. 1 depicts an exemplary embodiment of a system 100 suitable for use with a vehicle, such as aircraft 120. In an exemplary embodiment, the system 100 includes, without limitation, a display device 102, one or more user input devices 104, a processing system 106, a display system 108, a communications system 110, a navigation system 112, a flight management system (FMS) 114, one or more avionics systems 116, and a data storage element 118 suitably configured to support operation of the system 100, as described in greater detail below.

In exemplary embodiments, the display device 102 is realized as an electronic display capable of graphically displaying flight information or other data associated with operation of the aircraft 120 under control of the display system 108 and/or processing system 106. In this regard, the display device 102 is coupled to the display system 108 and the processing system 106, and the processing system 106 and the display system 108 are cooperatively configured to display, render, or otherwise convey one or more graphical representations or images associated with operation of the aircraft 120 on the display device 102. The user input device 104 is coupled to the processing system 106, and the user input device 104 and the processing system 106 are cooperatively configured to allow a user (e.g., a pilot, co-pilot, or crew member) to interact with the display device 102 and/or other elements of the system 100, as described in greater detail below. Depending on the embodiment, the user input device(s) 104 may be realized as a keypad, touchpad, keyboard, mouse, touch panel (or touchscreen), joystick, knob, line select key or another suitable device adapted to receive input from a user. In some exemplary embodiments, the user input device 104 includes or is realized as an audio input device, such as a microphone, audio transducer, audio sensor, or the like, that is adapted to allow a user to provide audio input to the system 100 in a "hands free" manner using speech recognition.

The processing system 106 generally represents the hardware, software, and/or firmware components configured to facilitate communications and/or interaction between the elements of the system 100 and perform additional tasks and/or functions to support operation of the system 100, as described in greater detail below. Depending on the embodiment, the processing system 106 may be implemented or realized with a general purpose processor, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. The processing system 106 may also be implemented as a combination of computing devices, e.g., a plurality of processing cores, a combination of a digital signal processor and a microprocessor, a plurality of microprocessors, one or more microprocessors in conjunction with a digital signal processor core, or any other such configuration. In practice, the processing system 106 includes processing logic that may be configured to carry out the functions, techniques, and processing tasks associated with the operation of the system 100, as described in greater detail below. Furthermore, the steps of a method or algorithm described in connection with the embodiments disclosed herein may be embodied directly in hardware, in firmware, in a software module executed by the processing system 106, or in any practical combination thereof. For example, in one or more embodiments, the processing system 106 includes or otherwise accesses a data storage element (or memory), which may be realized as any sort of non-transitory short- or long-term storage media capable of storing programming instructions for execution by the processing system 106. The code or other computer-executable programming instructions, when read and executed by the processing system 106, cause the processing system 106 to support or otherwise perform certain tasks, operations, functions, and/or processes described herein.

The display system 108 generally represents the hardware, software, and/or firmware components configured to control the display and/or rendering of one or more navigational maps and/or other displays pertaining to operation of the aircraft 120 and/or onboard systems 110, 112, 114, 116 on the display device 102. In this regard, the display system 108 may access or include one or more databases suitably configured to support operations of the display system 108, such as, for example, a terrain database, an obstacle database, a navigational database, a geopolitical database, an airport database, a terminal airspace database, a special use airspace database, or other information for rendering and/or displaying navigational maps and/or other content on the display device 102.

In the illustrated embodiment, the aircraft system 100 includes a data storage element 118, which is capable of storing, maintaining or otherwise implementing one or more of the databases that support operations of the aircraft system 100 described herein. In some embodiments, the data storage element 118 contains aircraft procedure information (or instrument procedure information) for a plurality of airports and maintains association between the aircraft procedure information and the corresponding airports. Depending on the embodiment, the data storage element 118 may be physically realized using RAM memory, ROM memory, flash memory, registers, a hard disk, or another suitable data storage medium known in the art or any suitable combination thereof. As used herein, aircraft procedure information should be understood as a set of operating parameters, constraints, or instructions associated with a particular aircraft action (e.g., approach, departure, arrival, climbing, and the like) that may be undertaken by the aircraft 120 at or in the vicinity of a particular airport. An airport should be understood as referring to any sort of location suitable for landing (or arrival) and/or takeoff (or departure) of an aircraft, such as, for example, airports, runways, landing strips, and other suitable landing and/or departure locations, and an aircraft action should be understood as referring to an approach (or landing), an arrival, a departure (or takeoff), an ascent, taxiing, or another aircraft action having associated aircraft procedure information. An airport may have one or more predefined aircraft procedures associated therewith, wherein the aircraft procedure information for each aircraft procedure at each respective airport are maintained by the data storage element 118 in association with one another.

Depending on the embodiment, the aircraft procedure information may be provided by or otherwise obtained from a governmental or regulatory organization, such as, for example, the Federal Aviation Administration in the United States. In an exemplary embodiment, the aircraft procedure information includes instrument procedure information, such as instrument approach procedures, standard terminal arrival routes, instrument departure procedures, standard instrument departure routes, obstacle departure procedures, or the like, traditionally displayed on a published charts, such as Instrument Approach Procedure (IAP) charts, Standard Terminal Arrival (STAR) charts or Terminal Arrival Area (TAA) charts, Standard Instrument Departure (SID) routes, Departure Procedures (DP), terminal procedures, approach plates, and the like. In exemplary embodiments, the data storage element 118 maintains associations between prescribed operating parameters, constraints, and the like and respective navigational reference points (e.g., waypoints, positional fixes, radio ground stations (VORs, VORTACs, TACANs, and the like), distance measuring equipment, non-directional beacons, or the like) defining the aircraft procedure, such as, for example, altitude minima or maxima, minimum and/or maximum speed constraints, RTA constraints, and the like.

Still referring to FIG. 1, in exemplary embodiments, the processing system 106 is coupled to the navigation system 112, which is configured to provide real-time navigational data and/or information regarding operation of the aircraft 120. The navigation system 112 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 112, as will be appreciated in the art. The navigation system 112 is capable of obtaining and/or determining the instantaneous position of the aircraft 120, that is, the current (or instantaneous) location of the aircraft 120 (e.g., the current latitude and longitude) and the current (or instantaneous) altitude or above ground level for the aircraft 120. The navigation system 112 is also capable of obtaining or otherwise determining the heading of the aircraft 120 (i.e., the direction the aircraft is traveling in relative to some reference). In the illustrated embodiment, the processing system 106 is also coupled to the communications system 110, which is configured to support communications to and/or from the aircraft 120. For example, the communications system 110 may support communications between the aircraft 120 and air traffic control or another suitable command center or ground location. In this regard, the communications system 110 may be realized using a radio communication system and/or another suitable data link system. In this regard, various embodiments of the communications system 110 hardware and/or other components configured to support data link communications to/from the aircraft 120 using a data link infrastructure and/or a data link service provider.

In exemplary embodiments, the processing system 106 is also coupled to the FMS 114, which is coupled to the navigation system 112, the communications system 110, and one or more additional avionics systems 116 to support navigation, flight planning, and other aircraft control functions in a conventional manner, as well as to provide real-time data and/or information regarding the operational status of the aircraft 120 to the processing system 106. Although FIG. 1 depicts a single avionics system 116, in practice, the system 100 and/or aircraft 120 will likely include numerous avionics systems for obtaining and/or providing real-time flight-related information that may be displayed on the display device 102 or otherwise provided to a user (e.g., a pilot, a co-pilot, or crew member). For example, practical embodiments of the system 100 and/or aircraft 120 will likely include one or more of the following avionics systems suitably configured to support operation of the aircraft 120: a weather system, an air traffic management system, a radar system, a traffic avoidance system, a broadcast system (e.g., Automated Terminal Information Service (ATIS), an Automatic Dependent Surveillance-Broadcast (ADS-B) system, or the like),_an autopilot system, an autothrust system, a flight control system, hydraulics systems, pneumatics systems, environmental systems, electrical systems, engine systems, trim systems, lighting systems, crew alerting systems, electronic checklist systems, an electronic flight bag and/or another suitable avionics system.

It should be understood that FIG. 1 is a simplified representation of the system 100 for purposes of explanation and ease of description, and FIG. 1 is not intended to limit the application or scope of the subject matter described herein in any way. It should be appreciated that although FIG. 1 shows the display device 102, the user input device 104, and the processing system 106 as being located onboard the aircraft 120 (e.g., in the cockpit), in practice, one or more of the display device 102, the user input device 104, and/or the processing system 106 may be located outside the aircraft 120 (e.g., on the ground as part of an air traffic control center or another command center) and communicatively coupled to the remaining elements of the system 100 (e.g., via a data link and/or communications system 110). Similarly, in some embodiments, the data storage element 118 may be located outside the aircraft 120 and communicatively coupled to the processing system 106 via a data link and/or communications system 110. Furthermore, practical embodiments of the system 100 and/or aircraft 120 will include numerous other devices and components for providing additional functions and features, as will be appreciated in the art. In this regard, it will be appreciated that although FIG. 1 shows a single display device 102, in practice, additional display devices may be present onboard the aircraft 120.

Additionally, it should be noted that in other embodiments, features and/or functionality of processing system 106 described herein can be implemented by or otherwise integrated with the features and/or functionality provided by the FMS 114. In other words, some embodiments may integrate the processing system 106 with the FMS 114. In yet other embodiments, various aspects of the subject matter described herein may be implemented by or at an electronic flight bag (EFB) or similar electronic device that is communicatively coupled to the processing system 106 and/or the FMS 114. In this regard, in the context of a UAV or other unmanned or remotely operated aircraft, the display device 102, the user input device 104 and/or the processing system 106 or functionality associated therewith may be implemented by or at a remote control device external to the aircraft 120 (e.g., as part of a remote control device that wirelessly communicates with the aircraft system 100). Thus, although the subject matter may be described primarily in the context of an implementation onboard the aircraft 120, the subject matter may be implemented in an equivalent manner at a remote control device or other external computing device for autonomously or remotely controlled aircraft.

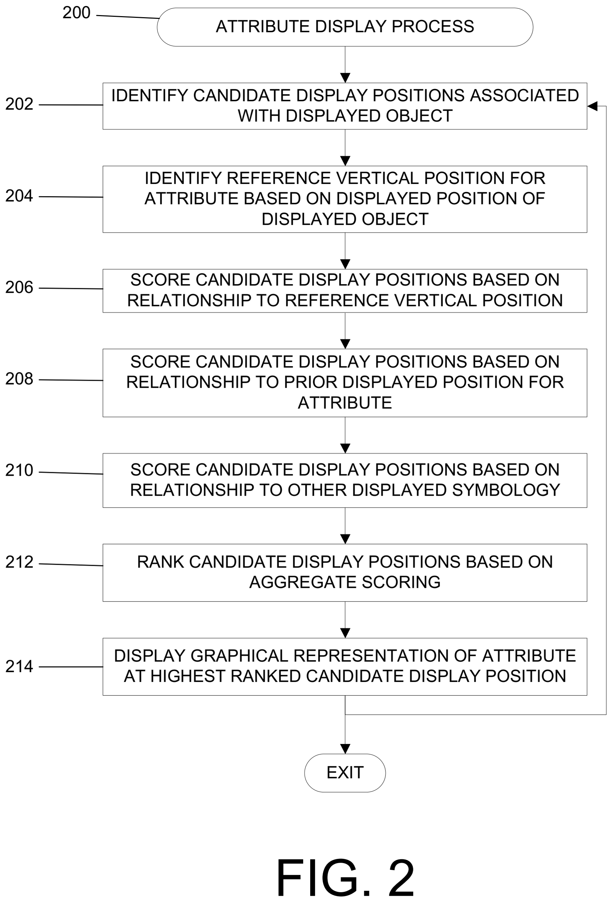

FIG. 2 depicts an exemplary embodiment of an attribute display process 200 suitable for implementation by the aircraft system 100 to dynamically position attributes associated with objects with respect to displayed symbology for those objects on a forward-looking GUI display such that the displayed position of a respective attribute improves visibility of the attribute or other symbology on the GUI display while maintaining visual association between the displayed attribute and the displayed symbology for a respective object. The various tasks performed in connection with the illustrated process may be implemented using hardware, firmware, software executed by processing circuitry, or any combination thereof. For illustrative purposes, the following description may refer to elements mentioned above in connection with FIG. 1. In practice, portions of the attribute display process 200 may be performed by different elements of a vehicle system. That said, exemplary embodiments are described herein in the context of the attribute display process 200 being primarily performed by an attribute display service at a processing system 106 or FMS 114. It should be appreciated that the attribute display process 200 may include any number of additional or alternative tasks, the tasks need not be performed in the illustrated order and/or the tasks may be performed concurrently, and/or attribute display process 200 may be incorporated into a more comprehensive procedure or process having additional functionality not described in detail herein. Moreover, one or more of the tasks shown and described in the context of FIG. 2 could be omitted from a practical embodiment of the attribute display process 200 as long as the intended overall functionality remains intact.

Referring to FIG. 2 with continued reference to FIG. 1, in exemplary implementations, the attribute display process 200 is performed during operation of the aircraft 120 to display attributes associated with displayed objects related to a route of a flight plan defined for the aircraft 120 in a manner that improves visibility and visual associations with the attributes without interfering with other symbology displayed concurrently. For example, as described in greater detail below in the context of a SVS or PFD GUI display including a forward-looking three-dimensional perspective view of terrain ahead of the aircraft 120, the attribute display process 200 determines display positions for attributes associated with waypoints or other navigational reference points associated with the flight plan route displayed on the GUI display in a manner that improves visibility of the attributes and cognition of the relationship between the attributes and the displayed waypoints without overlapping or interfering with the pitch ladder symbology, flight path vector (FPV) symbology, radar altimeter (RA) symbology, runway approach indicator (RAI) symbology, and/or the like.

In exemplary implementations, the attribute display process 200 is performed during operation of an aircraft to continually analyze the currently displayed waypoints or other displayed objects related to the flight plan route to dynamically determine where their respective associated attributes should be displayed relative to their corresponding displayed symbology. In the illustrated embodiment, the attribute display process 200 begins by identifying a plurality of different candidate display positions associated with a displayed object where its associated attributes could potentially be displayed (task 202). In exemplary implementations, the candidate display positions correspond to a set of two-dimensional pixel coordinate locations that extend vertically from a lower pixel coordinate location to an upper pixel coordination to span or otherwise encompass the altitude associated with the displayed object in the vertical dimension. In this regard, the plurality of different candidate display positions correspond to a range or area of pixel coordinate locations that may span from a lower pixel coordinate location corresponding to the terrain or ground level at the geographic location associated with the displayed object to an upper pixel coordination corresponding to an altitude that is at or above the altitude associated with the displayed object. These corresponding pixel positions can be obtained with perspective view transformations from three-dimensional space coordinates into two-dimensional screen coordinates. The candidate display positions may also span or extend horizontally from a leftmost pixel coordinate location to a rightmost pixel coordinate location to encompass the geographic location associated with the displayed object in the horizontal or lateral dimension. Thus, the plurality of different candidate display positions may define a two-dimensional area of pixel coordinate locations encompassing the symbology for a displayed object where an attribute associated with that displayed object can be anchored, positioned or otherwise be displayed in visual or graphical association with the displayed object symbology.

The illustrated attribute display process 200 continues by identifying or otherwise determining a reference vertical position for displaying the attribute based at least in part on the displayed position of the symbology for the displayed object associated with that attribute (task 204). In this regard, the reference vertical position corresponds to a target pixel coordinate location where anchoring, positioning or otherwise displaying a graphical representation of the attribute is most likely to cause a pilot or other viewer of the GUI display to establish a visual association between the graphical representation of the attribute and the displayed object symbology to maximize cognition of the relationship of the displayed attribute to the displayed object. For example, in one or more embodiments, a reference vertical pixel coordinate location is calculated or otherwise determined based on a vertical pixel coordinate location associated with a displayed ownship aircraft symbol on the GUI display to provide a desired declination angle between a line-of-sight to the displayed ownship aircraft symbol and a line-of-sight to the reference vertical pixel coordinate location. In one example, the reference vertical pixel coordinate location is configured to result in a declination angle of -3° for the line-of-sight to the reference vertical pixel coordinate location relative to the line-of-sight to the displayed zero pitch reference symbology.

After identifying the potential candidate display positions and the reference vertical position for the attribute, the attribute display process 200 continues by scoring the potential candidate display positions across a plurality of different factors and then ranking the potential candidate display positions based on their respective aggregate scores before selecting the highest ranked candidate display position for displaying the graphical representation of the attribute (tasks 206, 208, 210, 212, and 214). In this regard, the attribute display service scores each potential candidate display position based on the vertical deviation or angle between the respective candidate display position and the reference vertical position, the distance or difference between the respective candidate display position and the preceding (or prior) display position for the attribute, and the amount or degree by which the respective candidate display position conflicts, interferes or overlaps with other symbology on the GUI display. The respective vertical deviation score, temporal deviation score, and visibility score assigned to each potential candidate display position may be combined or otherwise aggregated to arrive at an aggregate score for each potential candidate display position, with the potential candidate display position having the highest aggregate score value being selected or otherwise identified for use displaying a graphical representation of the attribute. In this regard, the graphical representation of the attribute may be anchored to, referenced from, or otherwise positioned at the candidate display position having the highest aggregate score value.

The attribute display process 200 may repeat to dynamically re-identify and re-score potential candidate display positions, and then dynamically update the displayed position of the graphical representation of the attribute as the aircraft 120 travels and/or changes its attitude to reposition the graphical representation of the attribute in a manner that minimizes deviations from its preceding displayed position and deviations from the reference vertical position for the attribute to improve cognition of the displayed attribute and maintain visual association with the displayed object to which the attribute belongs while maintaining visibility of the displayed attribute with respect to other symbology on the GUI display.

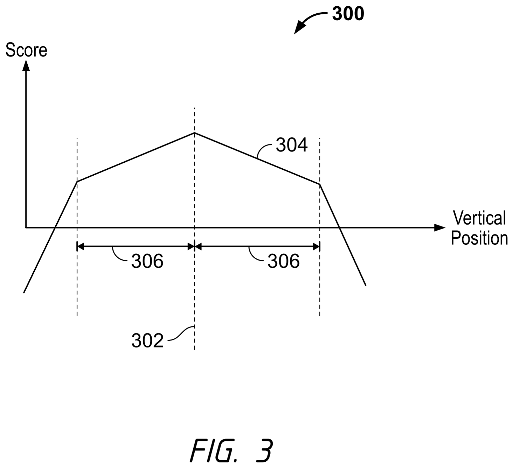

Still referring to FIG. 2, in the illustrated embodiment, the attribute display process 200 assigns a score to each of the candidate display positions based on the relationship between the respective candidate display position and the reference vertical position (task 206). For example, the attribute display service may determine a difference between the vertical pixel coordinate location associated with the respective candidate display position and the reference vertical position for the attribute and then assign a vertical deviation score to the candidate display position based on the difference (or vertical pixel distance). FIG. 3 is a graph 300 depicting an exemplary relationship between the assigned vertical deviation score 304 as the vertical deviation increases or decreases relative to the reference vertical position 302 for the attribute. In this regard, the assigned vertical deviation score 304 is at its maximum for a candidate display position at the reference vertical position 302 and linearly decreases at a first rate (or with a first slope) as the difference increases within a threshold distance 306 of the reference vertical position 302 corresponding to a normal range of vertical positions before linearly decreasing at a greater rate as the difference increases beyond the threshold distance 306 of the reference vertical position 302. Thus, the vertical deviation score 304 is biased in favor of candidate display positions closest to the target vertical position on the GUI display that is desired or preferred for cognitive purposes while penalizing candidate display positions that are above or below the reference vertical position by an anomalous amount that is likely to impair cognition of the visual association between the attribute and the object. It should be noted that although FIG. 3 depicts a graph 300 of the vertical deviation score 304 corresponding to a segmented linear correlative function, it should be appreciated that the subject matter described herein is not limited to any particular scheme or manner for scoring the vertical deviation.

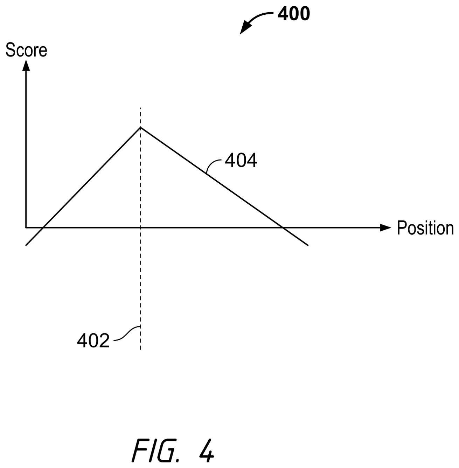

Referring again to FIG. 2, the attribute display process 200 also assigns a score to each of the candidate display positions based on the relationship between the respective candidate display position and the preceding (or prior) displayed position of the attribute (task 208). In this regard, during the initial iteration of the attribute display process 200, the preceding displayed position of the attribute may be realized as a default display position corresponding to the reference vertical position. Thereafter, during subsequent iterations of the attribute display process 200, the preceding displayed position of the attribute is realized as the displayed position selected and utilized as a result of the preceding iteration of the attribute display process 200 at task 214. FIG. 4 is a graph 400 depicting an exemplary relationship between the assigned temporal deviation score 404 as the distance increases or decreases relative to the preceding displayed position 402 of the attribute. In this regard, the assigned temporal deviation score 404 is at its maximum for a candidate display position at the preceding displayed position 402 and linearly decreases as the distance between the candidate display position and the preceding displayed position 402 increases. It should be noted that although FIG. 4 depicts a graph 400 of the temporal deviation score 404 in two-dimensions for ease of explanation, in practice, the temporal deviation score 404 may decrease with respect to increases in vertical distance between the vertical pixel coordinate location of the candidate display position and the vertical pixel coordinate location of the preceding displayed position 402 while concurrently decreasing with respect to increases in horizontal distance between the horizontal pixel coordinate location of the candidate display position and the horizontal pixel coordinate location of the preceding displayed position 402. Thus, the temporal deviation score 404 is biased in favor of candidate display positions closest to the preceding displayed position 402 on the GUI display, both horizontally and vertically.

Referring again to FIG. 2, the attribute display process 200 also assigns a score to each of the candidate display positions based on the relationship between the respective candidate display position and potentially interfering symbology in an overlying graphics layer (task 210). In this regard, the forward-looking perspective view GUI display may be composed of multiple different graphics layers that are stacked, merged or otherwise combined to arrive at a SVS PFD GUI display depicted on the display device 102. For example, the terrain background may be realized as a topographic map image that is rendered or otherwise defined using a scalable vector graphics (SVG) format or other vector image format that maintains an association between topography and geographic location. The graphical representations of the route segments of the flight plan and corresponding waypoint symbology or other graphical representations of navigational reference points associated with the current flight plan may be rendered or otherwise defined within another vector graphics layer that similarly overlies the terrain background vector graphics layer, and potentially other underlying graphics layers, such as a waypoint vector graphics layer, a navigation aid (NAVAID) object layer, an airway layer, a geopolitical boundary layer, and/or the like. In this regard, one or more geographic locations or other geographic anchor points associated with the waypoints, procedures, navigational reference points or other objects associated with the flight plan may be utilized to align the displayed object symbology with the underlying terrain background graphics layer such that the same geographic location within each respective graphics layer is collocated at the same pixel address or other location on the GUI display. An upper vector graphics layer overlying the flight plan graphics layer and the terrain background vector graphics layer may include PFD symbology, such as pitch ladder symbology or other attitude indicators, an altimeter or other altitude indicator, a vertical speed indicator, an airspeed indicator (or airspeed tape), a heading indicator, flight path vector (FPV) symbology, radar altimeter (RA) symbology, runway approach indicator (RAI) symbology, and/or the like, and potentially additional interactive GUI elements.

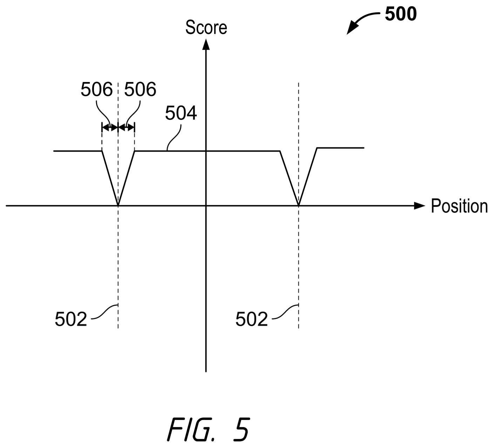

FIG. 5 is a graph 500 depicting an exemplary relationship between the assigned visibility score 504 and the respective position of the candidate display position as the position varies relative to the respective displayed positions 502 of symbology in an overlying graphics layer. For example, the assigned visibility score 504 may have a substantially fixed or constant maximum value assigned to candidate display positions that are not within a threshold distance 506 of a respective displayed position 502 of an overlying symbol corresponding to a maximum visibility at those unobstructed candidate display positions. For candidate display positions within the threshold distance 506 of the respective displayed position 502 of an overlying symbol, the assigned visibility score 504 may linearly decrease to a minimum value for a candidate display position that matches or is otherwise identical to the respective displayed position 502 of an overlying symbol to indicate minimum visibility at an obstructed candidate display position. In this manner, the scoring of a candidate display position is lowered when at least a portion of a higher priority symbol (e.g., flight path symbology, flight director symbology) or other overlying symbol is present at or within a threshold distance of the candidate display position. It should be noted that although FIG. 5 depicts a graph 500 of the visibility score 504 in two-dimensions for ease of explanation, in practice, the temporal visibility score 504 may concurrently vary with respect to both vertical and horizontal position. Thus, the visibility score 504 is biased in favor of candidate display positions that are not obstructed by overlying symbology.

In one or more implementations, in addition to considering symbology in overlying graphics layers, the attribute display process 200 also analyzes the background terrain graphics layer and/or obstacle graphics layer to score candidate display positions based on whether or not they are obstructed by terrain between the current geographic location of the aircraft and the geographic location of the object associated with the attribute. For example, hills, mountains, or other obstacles rendered on a forward-looking perspective view GUI display at geographic locations between the viewer position (or current aircraft position) and the geographic location associated with a more distant waypoint or object may be rendered at vertical pixel coordinate locations that would overlap or otherwise obstruct one or more candidate display positions. In this regard, when using perspective view transformation to position object and terrain onto a display screen, they are occupying the same screen location, however, the distance from the present view position to the terrain object is closer and therefore obscure the objects having larger distance measures. For candidate display positions that align with or otherwise overlap with terrain or obstacle features occupying the same vertical pixel coordinate location but correspond to terrain or obstacle features at geographic locations in advance of the geographic location of the object associated with the attribute, the attribute display process 200 may assign a lower visibility score (e.g., a visibility score of 0) similar to if the candidate display positions were obstructed by overlying symbology to avoid rendering the graphical representation of the attribute associated with the object behind the terrain or obstacle feature that is being concurrently rendered on the GUI display.

Additionally, in some implementations, the attribute display process 200 also analyzes graphical representations of flight plan symbology to score candidate display positions based on whether or not they are obstructed by other flight plan symbology. In this regard, for candidate display positions that align with or otherwise overlap with flight path vector (FPV) symbology, waypoint symbology, or other graphical representations of navigational references associated with the flight plan, the attribute display process 200 may assign a lower visibility score (e.g., a visibility score of 0) to facilitate selecting a visible display position that is not obstructed based at least in part on respective displayed positions of graphical representations of the current flight plan.

Referring again to FIG. 2, the attribute display process 200 calculates or otherwise determines an aggregate score for each of the candidate display positions as a function of the respective values of the vertical deviation score, the temporal deviation score and the visibility score assigned to the respective candidate display position, and then selects or otherwise identifies the candidate display position having the highest aggregate score for displaying the graphical representation of the attribute (tasks 212, 214). For example, depending on the implementation, the attribute display service may add or average the different scores assigned to a respective candidate display position to arrive at a cumulative or aggregated score for that respective candidate display position. In one implementation, the visibility score is configured to vary between a minimum value of zero (for an obstructed position) and a maximum value for an unobstructed position such that the visibility score is capable of being utilized as a weighting factor that can be utilized to multiply the averaged value of the vertical deviation score and the temporal deviation score to arrive at an aggregated score with a value of zero for obstructed candidate display positions and a positive non-zero value for unobstructed candidate display positions, such that the unobstructed candidate display position exhibiting the least vertical and temporal deviation is likely to have the highest aggregated score and selected for presentation of the attribute. That said, it should be appreciated that there are numerous different ways in which the individual score values may be combined to arrive at an aggregated score, and the subject matter described herein is not intended to be limited to any particular implementation.

Moreover, in alternative embodiments, various logical rules may be utilized to filter or otherwise exclude candidate display positions based on assigned scores to select or otherwise identify the candidate display position for displaying the graphical representation of the attribute. For example, the candidate display positions may be filtered based on visibility score to arrive at an initial visible subset of candidate display positions that excludes any potential candidate display positions having a visibility score that is less than a threshold value. Thereafter, the visible subset of candidate display positions may be filtered based on temporal deviation score (e.g., by further excluding any potential candidate display positions having a temporal deviation score that is less than a second threshold value) to arrive at a static visible subset of candidate display positions that are closest to the preceding displayed position of the attribute. The vertical deviation score may then be utilized to select or otherwise identify the candidate display position having the minimum vertical deviation (or highest vertical deviation score) relative to the reference vertical position for the attribute for use as the updated position for displaying the graphical representation of the attribute (which may or may not be equal to the preceding displayed position of the graphical representation of the attribute). Thus, the subject matter described herein is not limited to any particular scheme for selecting the candidate display position to be utilized for displaying the graphical representation of the attribute associated with a displayed object.

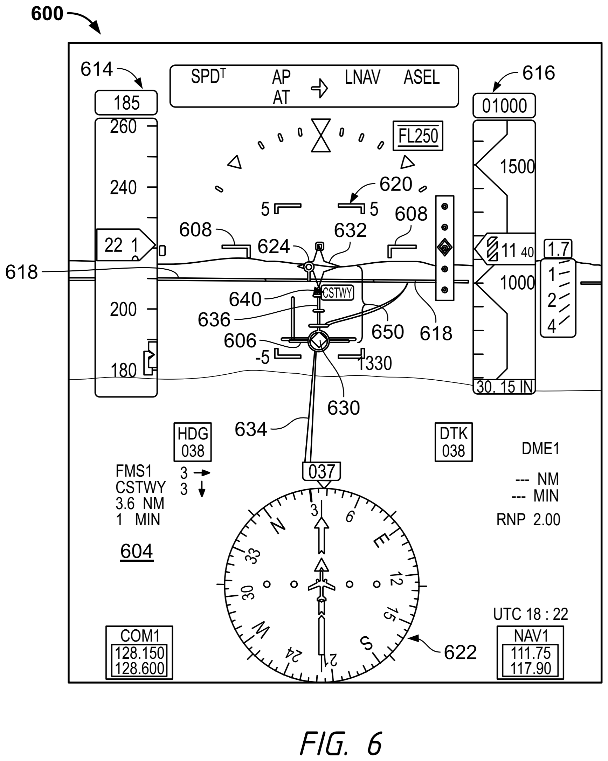

Referring now to FIG. 6, and with continued reference to FIGS. 1-5, in one or more exemplary embodiments, the processing system 106 and the display system 108 are cooperatively configured to control the rendering of a flight deck GUI display 600 on the display device 102 that includes a primary flight display 602 capable of being utilized by a pilot or other user for guidance with respect to manually flying the aircraft 120, that is, the flight deck display 600 may be utilized as the pilot's primary reference for flight information (e.g., speed and altitude indicia, attitude indicia, lateral and vertical deviation indicia, mode annunciations, and the like). It should be appreciated that flight deck display 600 as depicted in FIG. 6 represents the state of a dynamic display frozen at one particular time, and that the flight deck display 600 may be continuously refreshed during operation as the aircraft 120 travels to reflect changes in the attitude, altitude and/or position of the aircraft 120 with respect to the earth. In this regard, the primary flight display 602 includes one or more graphical attitude indicia 618, 620 that convey the current attitude of the aircraft 120 based on the relationship between ownship aircraft symbology 606, 608 and the respective attitude indicia 618, 620.

In the illustrated embodiment, the primary flight display 602 includes several features that are graphically rendered, including, without limitation a perspective view of terrain 604, a reference symbol 606 corresponding to the current flight path of the aircraft 120, an airspeed indicator 614 (or airspeed tape) that indicates the current airspeed of the aircraft 120, an altitude indicator 616 (or altimeter tape) that indicates the current altitude of the aircraft 120, a zero pitch reference line 618, a pitch ladder scale 620, a compass 622, and an aircraft reference symbol 608, as described in greater detail below. The embodiment shown in FIG. 6 has been simplified for ease of description and clarity of illustration - in practice, embodiments of the primary flight display 602 may also contain additional graphical elements corresponding to or representing pilot guidance elements, flight data, numerical information, trend data, and the like. For the sake of clarity, simplicity, and brevity, the additional graphical elements of the primary flight display 602 will not be described herein.

In exemplary embodiments, the terrain 604 is based on a set of terrain data that corresponds to a viewing region proximate the current location of aircraft 120 that corresponds to the forward-looking cockpit viewpoint from the aircraft 120. As described above, the processing system 106 and/or the display system 108 includes or otherwise accesses a terrain database, and in conjunction with navigational information (e.g., latitude, longitude, and altitude) and orientation information (e.g., aircraft pitch, roll, heading, and yaw) from one or more onboard avionics systems 112, 114, 116, the processing system 106 and/or the display system 108 controls the rendering of the terrain 604 on the display device 102 and updates the set of terrain data being used for rendering as needed as the aircraft 120 travels. In this regard, in some embodiments, the processing system 106 and/or the display system 108 renders the terrain 604 in a perspective or three-dimensional view that corresponds to a flight deck (or cockpit) viewpoint. In other words, terrain 604 may be displayed in a graphical manner that simulates the flight deck viewpoint, that is, the vantage point of a person in the cockpit of the aircraft (e.g., a line of sight aligned with a longitudinal axis of the aircraft). Thus, features of terrain 604 may be displayed in a conformal manner, relative to the earth. For example, the relative elevations and altitudes of features in terrain 604 can be displayed in a virtual manner that emulates reality. Moreover, as the aircraft 120 navigates (e.g., turns, ascends, descends, rolls, etc.), the graphical representation of terrain 604 and other features of the perspective display can shift to provide a continuously updated virtual representation for the flight crew that reflects the current state of the aircraft 120 with respect to the earth while the position and orientation of the aircraft reference symbol 608 with respect to the zero pitch reference line 618 and pitch ladder scale 620 reflects the current pitch of the aircraft 120. It should be appreciated that the perspective view associated with primary flight display 602 need not always include a perspective view of terrain 604. For example, in the absence of terrain data, the perspective view of the display may appear flat, blank, or otherwise void of conformal terrain graphics. In other embodiments, the display device 102 may be realized as a head-up display (HUD) where the symbology of the primary flight display 602 is rendered on the HUD to appear in the foreground overlying the surrounding real-world environment.

As illustrated in FIG. 6, the flight path reference symbol 606, the airspeed indicator 614, the altitude indicator 616, the zero pitch reference line 618, the pitch ladder scale 620, the compass 622, and the aircraft reference symbol 608 are displayed or otherwise rendered overlying the terrain 604. For example, the PFD symbology 606, 608, 614, 616, 618, 620, 622 may be rendered in an upper graphics layer that overlies the background graphics layer that includes the synthetic three-dimensional perspective view of the terrain 604 in the vicinity of the aircraft 120. During flight, the flight path reference symbol 606 moves within primary flight display 602 such that it generally indicates the direction the aircraft 120 is currently moving. The pitch ladder scale 620 includes a number of parallel marks and/or alphanumeric characters that indicate the pitch of the aircraft 120 relative to a reference orientation for the body of the aircraft 120 using any convenient scale, where a pitch angle of zero degrees with respect to the reference orientation for the body of the aircraft 120 (i.e., zero pitch on pitch ladder scale 620) corresponds to the zero pitch reference line 618. In exemplary embodiments, the zero pitch reference line 618 is rendered in a conformal manner such that it moves (up and down) and rotates (clockwise and counterclockwise) within the primary flight display 602 in accordance with the current orientation (e.g., pitch, roll, and yaw) of the aircraft 120. In this regard, the rendering and display of zero pitch reference line 618 is influenced by the actual zero pitch orientation of the aircraft. It will be appreciated that the zero pitch reference line 618 generally corresponds to an artificial horizon line (e.g., an angle of zero degrees for the aircraft 120 nose to pitch up or down with respect to the real horizon parallel to the local earth surface). Thus, the zero pitch reference line 618 may be utilized to discern relative altitude and/or attitude of the terrain 604 with respect to the aircraft 120. Markings of pitch ladder scale 620 that appear above zero pitch reference line 618 correspond to positive pitch of the aircraft, and markings of pitch ladder scale 620 that appear below zero pitch reference line 618 correspond to negative pitch of the aircraft. The "intersection" of the aircraft reference symbol 608 with pitch ladder scale 620 represents the current pitch of the aircraft 120, as indicated on pitch ladder scale 620. Although not illustrated in FIG. 6, practical implementations of the primary flight display 602 may also include a roll scale (e.g., a graduated arc) including graphical indicia of the current bank angle of the aircraft 120 and a reference graphical indication of a zero roll angle for the aircraft 120.

Still referring to FIG. 6, in exemplary implementations, the PFD GUI display 600 includes a flight plan graphics layer overlying the terrain graphics layer and underlying an upper graphics layer including the PFD symbology that includes graphical representations of the waypoints, navigational aids (e.g., VORs, VORTACs, DMEs, and the like) or other objects associated with the current flight plan that are within the currently displayed geographic area of the PFD GUI display 600 and corresponding navigational route segments between the those waypoints of the current flight plan overlying the background terrain 604. For example, in the illustrated implementation, the PFD GUI display 600 includes flight path vector (FPV) symbology 630 corresponding to the current navigational route segment to be flown en route to the next downpath waypoint of the flight plan along with a graphical representation 632 of that downpath waypoint and a graphical indication of the lateral trajectory of the flight plan 634. In this regard, in exemplary implementations, the waypoint symbology 632 and the flight plan lateral trajectory indicia 634 are rendered on or overlying the perspective view of terrain 604 in a conformal manner. In other words, waypoint symbology 632 and flight plan indicia 634 are displayed in a three-dimensional manner that corresponds to the actual contour and geographic location of the corresponding terrain 604. Thus, the waypoint symbology 632 is graphically displayed in its specified geographic location, and in proper relation to other displayed features of terrain 604, at a specified altitude corresponding to the flight plan. In exemplary implementations, the waypoint symbology 632 is joined to the flight plan indicia 634 using a displayed tether line 636 (or stem or stalk) that visually tethers and "pins" its waypoint marker to the geographic location of the corresponding waypoint on the depicted terrain 604. Moreover, the displayed height of each waypoint tether line 636 and corresponding pixel coordinate locations for the displayed waypoint symbology 632 may correspond to an altitude criterion associated with the respective waypoint in accordance with the flight plan (e.g., a planned altitude, an altitude constraint, an altitude restriction and/or the like). That said, it should be noted that a waypoint need not have any constraints associated with it, and in some implementations, the waypoint may have an arbitrary altitude value associated therewith for purposes of positioning the waypoint marker on the perspective display. Aspects pertaining to generating graphical representations of waypoints and other flight plan indicia conformally with respect to terrain 604 in a forward-looking perspective view GUI display that are not germane to the subject matter described herein are described in greater detail in U.S. Patent No. 9,273,964 and U.S. Patent No. 8,457,889, which are incorporated by reference herein in their entirety.

Referring to FIG. 6 with reference to FIGS. 1-2, in exemplary implementations, the attribute display process 200 is performed with respect to the waypoint symbology and other objects rendered within the flight plan graphics layer to dynamically determine where to position displayed attributes associated with those respective objects on the PFD GUI display 600, such as, for example, a name or other identifier associated with a waypoint, an altitude constraint associated with a waypoint, a speed constraint associated with a waypoint, and/or the like. In this regard, FIG. 6 depicts a graphical representation 640 of the value for the waypoint identifier ("CSTWY") associated with the downpath waypoint of the flight plan corresponding to the displayed waypoint symbology 632 that is positioned on the PFD GUI display 600 in accordance with the attribute display process 200.

Based on the pixel coordinate location associated with the waypoint symbology 632 (e.g., the geometric center or other anchor associated with the waypoint marker) for the CSTWY waypoint and the pixel coordinate location associated with the geographic location of the CSTWY waypoint along the flight plan path 634 (which corresponds to an above ground level of zero at the geographic location of the CSTWY waypoint), the attribute display process 200 identifies a plurality of candidate display positions 650 that span the PFD GUI display 600 vertically from the value of the *y*-axis pixel coordinate associated with the geographic location of the CSTWY waypoint along the flight plan path 634 to the value of the *y*-axis pixel coordinate associated with the waypoint symbology 632 to define a range of potential pixel coordinate locations that encompass the pixel coordinate location associated with the waypoint symbology 632 in the vertical (e.g., *y*-axis pixel coordinate) dimension.

It should be noted that although FIG. 6 depicts an example of the range of potential pixel coordinate locations corresponding to the candidate display positions 650 spanning from the ground level at the CSTWY waypoint geographic location to the altitude associated with the CSTWY waypoint symbology 632, in practice, the range defined by the candidate display positions may be larger or smaller, and in some implementations, may span vertically from a lower pixel coordinate location that is above the ground level at the respective waypoint geographic location and/or to an upper pixel coordinate location corresponding to an altitude that is above the altitude associated with the CSTWY waypoint symbology 632, and the subject matter described herein is not intended to be limited to any particular scheme or arrangement for identifying the initial set of candidate display positions. In this regard, although FIG. 6 depicts the candidate display positions 650 corresponding to different pixel coordinate locations along the waypoint tether line 636 between the *xy*-pixel coordinate location of the flight plan path 634 at the CSTWY waypoint geographic location and the xy-pixel coordinate location of the waypoint symbology 632 for purposes of explanation, in practice, the candidate display pixel coordinate locations may vary along the x-axis pixel coordinate dimension and/or the *y-*axis pixel coordinate dimension to define a two-dimensional range of pixel coordinate locations that encompass the waypoint tether line 636 and/or the waypoint symbology 632 on either side of the waypoint tether line 636 while extending to or otherwise encompassing the pixel coordinate location of the waypoint symbology 632 in at least one of the horizontal (e.g., x-axis pixel coordinate) or vertical (e.g., *y*-axis pixel coordinate) dimension.

Referring to FIG. 6 with reference to FIG. 2, the PFD GUI display 600 depicts the graphical representation 640 of the value for the waypoint identifier associated with CSTWY waypoint as being rendered or otherwise anchored at a selected one of the candidate display pixel coordinate locations 650 by generating or otherwise rendering a text box GUI element including the text value of CSTWY having a respective left edge or corner of the text box GUI element being anchored at the selected pixel coordinate location 650. As described above, the particular one of the candidate display pixel coordinate locations 650 is selected based on the vertical deviation score assigned to the respective candidate display pixel coordinate location 650 based on its relationship to a vertical pixel coordinate location reference and the temporal deviation score assigned to the respective candidate display pixel coordinate location 650 based on its relationship to a preceding pixel coordinate location reference.

To assign vertical deviation scores to the candidate display pixel coordinate locations 650, the attribute display process 200 calculates or otherwise determines a reference value for the *y*-axis pixel coordinate location for the waypoint identifier based on the *y*-axis pixel coordinate location associated with the waypoint symbology 632 (e.g., at task 204). Thereafter, the attribute display process 200 assigns a vertical deviation score value to each of the potential candidate display pixel coordinate locations 650 based on the vertical distance between the *y*-axis pixel coordinate value for the respective candidate display pixel coordinate location 650 and the reference value for the *y*-axis pixel coordinate location corresponding to the desired or preferred declination angle for viewing the waypoint identifier value relative to the waypoint symbology 632 (e.g., by using segmented linear correlative function such as depicted in FIG. 3). In some situations, the vertical deviation score may bias the preferred position or highest scored candidate display pixel coordinate location towards the middle area between the displayed waypoint position and terrain, as the waypoint symbology is typically an aiming point on a PFD when flying an active flight plan. However, the waypoint identifiers or other attributes displayed at or near the location of the waypoint symbology may add unnecessary clutter, resulting in vertical adjustment of the waypoint identifier based on the scoring rules to avoid cluttering or conflicts with the flight path symbology.

To assign temporal deviation scores to the candidate display pixel coordinate locations 650 (e.g., at task 208), the attribute display process 200 calculates or otherwise determines the difference between the preceding pixel coordinate location where the CSTWY waypoint attribute is currently or was previously being displayed prior to the current iteration of the attribute display process 200. In this regard, for the initial iteration of the attribute display process 200, the preceding pixel coordinate location may be set to a default value, which could be calculated or determined based on the preferred *y*-axis pixel coordinate location (e.g., a midpoint of the waypoint tether line 636, a pixel coordinate location that is horizontally centered or aligned with the waypoint tether line 636 at the reference *y*-axis pixel coordinate location value, and/or the like). The attribute display process 200 assigns a temporal deviation score value to each of the potential candidate display pixel coordinate locations 650 based on the two-dimensional distance between the respective candidate display pixel coordinate location 650 and the preceding pixel coordinate location associated with the depicted waypoint identifier 640. During the subsequent iteration of the attribute display process 200 (e.g., after generating the PFD GUI display 600 in the state depicted in FIG. 6), the attribute display process 200 assigns temporal deviation score values to each of the subsequent set of potential candidate display pixel coordinate locations based on their respective two-dimensional distances relative to the selected pixel coordinate location associated with the depicted waypoint identifier 640 in FIG. 6.

As described above in the context of FIG. 2, after scoring the potential candidate display pixel coordinate locations 650 based on their respective relationships to different reference display positions on the PFD GUI display 600, the attribute display process 200 assigns attribute visibility scores to the candidate display pixel coordinate locations 650 (e.g., at task 210) to facilitate selecting a visible display position from among a subset of unobstructed candidate display positions based on the respective displayed positions of the different displayed PFD symbology 606, 608, 614, 616, 618, 620, 622 in an overlying graphics layer and other higher priority graphical representations displayed on the PFD GUI display 600, such as, for example, the FPV symbology 630, the terrain 604, a runway approach indicator (RAI) symbol, and/or the like. As described above, respective ones of the candidate display pixel coordinate locations 650 that are collocated with or within a threshold distance (e.g., distance 506) of a PFD symbol, a higher priority symbol, or potentially obstructing terrain in the foreground is assigned a relatively lower attribute visibility score (e.g., as shown in FIG. 5) that facilitates filtering or otherwise excluding those obstructed candidate display pixel coordinate locations 650 from being selected for presentation.

After scoring the potential candidate display pixel coordinate locations 650 across the individual scoring factors, the attribute display process 200 sorts, ranks or otherwise prioritizes the candidate display pixel coordinate locations 650 based on their aggregate scoring to select or otherwise identify the highest ranked candidate display pixel coordinate location 650 for positioning the displayed waypoint identifier 640 based on the ranking. Thereafter, as the aircraft 120 travels and exhibits changes in attitude, altitude and/or geographic location, the background terrain 604 on the PFD GUI display 600 is dynamically updated to reflect the current orientation of the aircraft 120 with respect to Earth, with the PFD symbology 606, 608, 614, 616, 618, 620, 622 being correspondingly adjusted to reflect the current state of the aircraft 120. After updating the terrain 604, the FPV symbology 630, the waypoint symbology 632, the flight path indicator 634 and the waypoint tether line 636 are dynamically updated in a corresponding manner to maintain the conformal relationship with the underlying terrain 604.

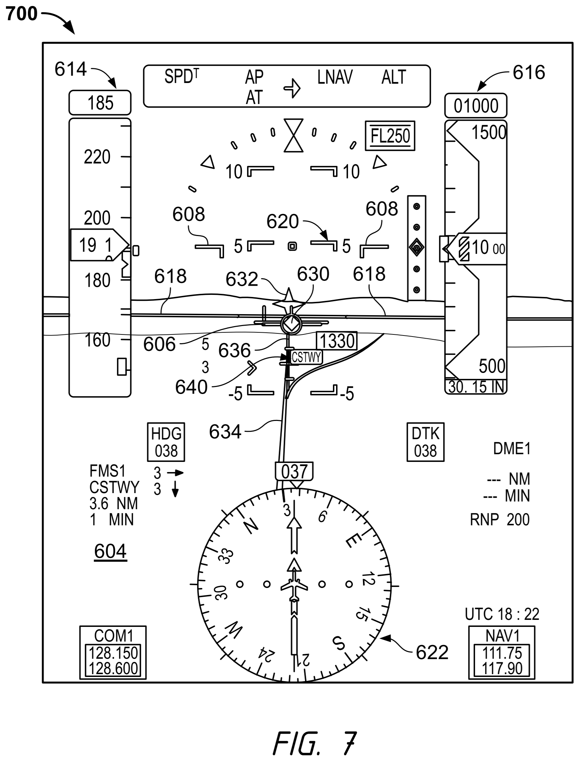

Referring to FIGS. 6-7, after updating the terrain and the overlying flight plan and PFD symbology on the PFD GUI display, the attribute display process 200 is repeated to dynamically update and adjust the position of the displayed waypoint identifier 640 on the updated PFD GUI display to maintain visibility of the waypoint identifier by selecting an unobstructed position for displaying the waypoint identifier while attempting to minimize the temporal deviation to position of the displayed waypoint identifier 640 relative to the state depicted in FIG. 6 while concurrently attempting to minimize the vertical deviation from a target vertical display position. In this regard, FIG. 7 depicts an updated state of a PFD GUI display 700 subsequent to the state of the PFD GUI display 600 depicted in FIG. 6 in accordance with the attribute display process 200. As shown, the displayed waypoint identifier 640 has been dynamically repositioned vertically to a vertical display position that is below the FPV symbology 630 and the ownship aircraft flight path symbology 606 in response to a change in the pitch of the aircraft to prevent obfuscation of the waypoint identifier 640.

By virtue of the subject matter described herein, attributes associated with displayed objects in a flight plan graphics layer may be dynamically positioned on a forward-looking perspective view GUI display in a manner that accounts for higher priority symbology (which may be rendered in overlying graphics layers) or other potentially obstructing graphical representations (which may be rendered in the same graphics layer or underlying graphics layers) to preserve visibility of the displayed attribute values while improving cognition of the visual association between the displayed attribute values and the respective objects associated therewith. For example, in the context of waypoint attributes, the attributes associated with displayed waypoints in a flight plan graphics layer may be dynamically positioned and rendered on a forward-looking perspective view GUI display in a manner that accounts for PFD symbology, other flight plan symbology (e.g., FPV symbology, RAI symbology and/or the like) or foreground terrain by dynamically varying the positioning of the waypoint attributes along the waypoint tether line to preserve visibility of the displayed waypoint attribute values while improving cognition of the visual association between the displayed waypoint symbology and its associated attributes.

For the sake of brevity, conventional techniques related to aircraft procedures, avionics systems, FMSs, flight planning, PFDs, SVSs, display systems, computer graphics, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of non-transitory storage medium known in the art. An exemplary storage medium is coupled to the processor such that the processor can read information from, and write information to, the storage medium. In the alternative, the storage medium may be integral to the processor. The processor and the storage medium may reside in an ASIC.

The subject matter may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is logically coherent.

Furthermore, the foregoing description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. For example, two elements may be coupled to each other physically, electronically, logically, or in any other manner, through one or more additional elements. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of assisting operation of a vehicle, the method comprising:
providing, on a display device associated with the vehicle, a graphical user interface (GUI) display comprising a graphical representation of a forward-looking perspective view of terrain in a vicinity of the vehicle and a second graphical representation of an object overlying the graphical representation of the forward-looking perspective view of terrain at a displayed position corresponding to a geographic location and an altitude associated with the object;
determining a plurality of candidate display positions for an attribute associated with the object based at least in part on the geographic location and the altitude associated with the object, wherein the plurality of candidate display positions encompass the displayed position of the object;
selecting, from among the plurality of candidate display positions, a visible display position for the attribute based at least in part on a reference display position for the attribute; and
rendering, on the display device, a third graphical representation of the attribute at the visible display position.

2. The method of claim 1, the GUI display comprising one or more graphical representations of additional objects, wherein selecting the visible display position comprises selecting the visible display position based at least in part on respective displayed positions of the one or more graphical representations.

3. The method of claim 2, wherein selecting the visible display position comprises:
identifying a subset of unobstructed candidate display positions of the plurality of candidate display positions based on the respective displayed positions of the one or more graphical representations; and
selecting the visible display position based at least in part on a respective distance between a respective unobstructed candidate display position of the subset of unobstructed candidate display positions.

4. The method of claim 2, wherein the one or more graphical representations comprise primary flight display (PFD) symbology.

5. The method of claim 1, wherein selecting the visible display position comprises selecting the visible display position based at least in part on a respective distance between a respective candidate display position and the reference display position.

6. The method of claim 5, further comprising determining the reference display position on the GUI display based at least in part on the displayed position of the object.

7. The method of claim 1, wherein selecting the visible display position comprises:
scoring the plurality of candidate display positions based at least in part on a respective distance between the reference display position and a respective candidate display position of the plurality of candidate display positions; and
selecting the visible display position based on the scoring.

8. The method of claim 7, further comprising ranking the plurality of candidate display positions based on the scoring, wherein selecting the visible display position comprises selecting a highest ranked candidate display position based on the ranking.

9. The method of claim 1, wherein the vehicle comprises an aircraft and the object comprises a waypoint of a flight plan associated with the aircraft, wherein determining the plurality of candidate display positions comprises identifying the plurality of candidate display positions along a waypoint tether line between the second graphical representation of the waypoint and the graphical representation of the forward-looking perspective view of terrain at the geographic location associated with the waypoint and the second graphical representation of the waypoint.

10. The method of claim 9, wherein selecting the visible display position comprises selecting the visible display position along the waypoint tether line that is unobstructed by primary flight display (PFD) symbology overlying the graphical representation of the forward-looking perspective view of terrain.

11. A computer-readable medium having computer-executable instructions stored thereon that, when executed by a processing system, cause the processing system to:
provide, on a display device associated with an aircraft, a primary flight display (PFD) graphical user interface (GUI) display comprising a graphical representation of a forward-looking perspective view of terrain ahead of the aircraft and a second graphical representation of a navigational reference point of a flight plan for the aircraft overlying the graphical representation of the forward-looking perspective view of terrain at a displayed position corresponding to a geographic location and an altitude associated with the navigational reference point;
determine a plurality of candidate display positions for an attribute associated with the navigational reference point based at least in part on the geographic location and the altitude associated with the navigational reference point, wherein the plurality of candidate display positions encompass the displayed position of the navigational reference point;
select, from among the plurality of candidate display positions, a visible display position for the attribute based at least in part on a reference display position for the attribute and respective display positions of PFD symbology overlying the graphical representation of the forward-looking perspective view of terrain on the PFD GUI display; and
render, on the PFD GUI display, a third graphical representation of the attribute at the visible display position.

12. The computer-readable medium of claim 11, wherein the computer-executable instructions are configurable to cause the processing system to:
score the plurality of candidate display positions based at least in part on a respective distance between the reference display position and a respective candidate display position of the plurality of candidate display positions; and
rank the plurality of candidate display positions based on the scoring, wherein the visible display position comprises a highest ranked candidate display position based on the ranking.

13. The computer-readable medium of claim 11, wherein the computer-executable instructions are configurable to cause the processing system to identify the plurality of candidate display positions along a tether line between the second graphical representation of the navigational reference point and the graphical representation of the forward-looking perspective view of terrain at the geographic location associated with the navigational reference point and the second graphical representation of the navigational reference point.

14. An aircraft system comprising:
a display device having a primary flight display including a graphical representation of a forward-looking perspective view of terrain rendered thereon; and
a processing system coupled to the display device to:
determine a plurality of candidate display positions for an attribute associated with a waypoint of a flight plan based at least in part on a geographic location and an altitude associated with the waypoint, wherein the plurality of candidate display positions encompass a displayed position of waypoint symbology corresponding to the waypoint on the primary flight display;
select, from among the plurality of candidate display positions, a visible display position for the attribute based at least in part on a relationship between the visible display position and a reference display position for the attribute; and
render, on the primary flight display on the display device, a third graphical representation of the attribute at the visible display position.

15. The aircraft system of claim 14, wherein the reference display position comprises one of a preceding display position of the third graphical representation of the attribute and a target vertical position for the attribute.
